# EUROPÄISCHE PATENTSCHRIFT

(11) **EP 2 901 034 B1**
(45) Veröffentlichungstag und Bekanntmachung des Hinweises auf die Patenterteilung: **09.11.2016**
(21) Anmeldenummer: 13791913.0
(22) Anmeldetag: 11.09.2013
(51) Int. Cl.: F16D 13/58

(54) **REIBUNGSKUPPLUNG**
FRICTION CLUTCH
EMBRAYAGE À FRICTION

(30) Priorität: 25.09.2012 DE 102012217234
(43) Veröffentlichungstag der Anmeldung: 05.08.2015
(73) Patentinhaber: Schaeffler Technologies AG & Co. KG, 91074 Herzogenaurach (DE)
(72) Erfinder: SCHNEIDER, Michael, 76534 Baden-Baden (DE); RABER, Christoph, 66564 Ottweiler-Steinbach (DE); MAIER, Stefan, 76534 Baden-Baden (DE); HELFER, Marc, 67530 Ottrott (FR)
(86) Internationale Anmeldenummer: PCT/DE2013/200173
(87) Internationale Veröffentlichungsnummer: WO 2014/048429

(56) Entgegenhaltungen:
- DE-A1- 10 245 299
- FR-A1- 2 774 732
- GB-A- 1 249 601
- US-A1- 2012 199 435

## Beschreibung

Die Erfindung betrifft eine Reibungskupplung, die insbesondere als Fahrkupplung in einem Antriebsstrang eines Kraftfahrzeuges verwendet werden kann und mit deren Hilfe ein Drehmoment von einer Eingangswelle, beispielsweise einer Kurbelwelle eines Motors, an eine Ausgangswelle, beispielsweise einer Eingangswelle eines Getriebes, weitergeleitet werden kann.

FR 2 774 732 A1 wird als nächstliegender Stand der Technik gegenüber dem Gegenstand des Anspruchs 1 angesehen. Es offenbart eine Reibungskupplung mit einer Anpressplatte, die einen Überlappungsbereich mit einem Kontaktbereich und mit einem kontaktfreien Bereich zwischen Tellerfederbolzen und Tellerfeder aufweist.

Durch eine Anfahrkupplung, wie beispielsweise aus der DE 197 46 281 A1 bekannt, kann über ein um eine Drehachse drehbares Schwungrad ein von einem Kraftfahrzeugmotor erzeugtes Drehmoment übertragen werden. Mit dem Schwungrad ist eine Anpressplatte zur Weiterleitung des Drehmomentes verbunden, die das Drehmoment über einen Reibbelag an eine Kupplungsscheibe reibschlüssig übertragen kann. Die Anfahrkupplung weist dabei üblicherweise zur Verlagerung der Anpressplatte eine Hebelfeder auf, wobei die Hebelfeder durch Tellerfederzentrierbolzen in einer Betriebsposition zentriert werden kann. Nachteilig ist, dass die Tellerfederzentrierbolzen, insbesondere im Dauerlastfall, beschädigt werden können, wodurch die Tellerfederbolzen brechen und ausfallen können, was zu einer verringerten Lebensdauer der Reibungskupplung führen kann.

Es ist daher die Aufgabe der Erfindung eine Reibungskupplung bereitzustellen, die Tellerfederbolzen mit einer verringerten Ausfallgefahr aufweist, wodurch die Betriebsfestigkeit der Reibungskupplung verbessert werden kann.

Erfindungsgemäß ist Reibungskupplung für einen Antriebsstrang eines Kraftfahrzeugs vorgesehen, mit einer Anpressplatte, die drehfest, jedoch axial begrenzt verlagerbar mit einem Gehäusedeckel, verbunden ist, einer vorzugsweise als Tellerfeder ausgebildeten Hebelfeder zur Kraftbeaufschlagung der Anpressplatte in axialer Richtung, wobei die Hebelfeder mit mindestens einem Tellerfederzentrierbolzen an dem Gehäusedeckel gelagert ist, wobei der Tellerfederzentrierbolzen an einem ersten Ende einen Stirnfläche mit einem aus der Stirnfläche herausragenden Bolzenschaft aufweist, wobei der Bolzenschaft in einem montierten Zustand in einer entsprechenden Aufnahmeöffnung des Gehäusedeckels gelagert ist und die Stirnfläche des Tellerfederzentrierbolzen und eine Innenfläche des Gehäusedeckels einen Überlappungsbereich ausbilden. Erfindungsgemäß weist der Überlappungsbereich einen Kontaktbereich und einen kontaktfreien Bereich auf, wobei der Kontaktbereich radial außenseitig des Bolzenschaftes angeordnet ist und der kontaktfreie Bereich radial innenseitig benachbart zu dem Bolzenschaft des Tellerfederzentrierbolzens angeordnet ist.

Durch eine Betätigung der Hebelfeder entlang eines Hebelweges kann die Kraftbeaufschlagung der Anpressplatte verringert werden, wodurch ein Ausrücken und Trennen der Reibungskupplung bewirkt werden kann. Die Hebelfeder kann mit mindestens einem Tellerfederzentrierbolzen an einem Gehäusedeckel der Reibungskupplung befestigt und zentriert werden. Mehrere Tellerfederzentrierbolzen können gleichmäßig ringförmig vorzugsweise an dem Gehäusedeckel der Reibungskupplung angeordnet sein. Zur beweglichen, vorzugsweise kippbaren, Lagerung der Hebelfeder kann beispielsweise radial außenseitig an dem mindestens einen Tellerfederzentrierbolzen mindestens ein Drahtring angeordnet sein, wobei die Hebelfeder an dem mindestens einen Drahtring anliegen kann. Vorzugsweise sind zwei Drahtringe vorgesehen, welche radial außenseitig an dem Tellerfederzentrierbolzen, vorzugsweise den Tellerfederzentrierbolzen, derart angeordnet sein können, dass die Hebelfeder zwischen den beiden Drahtringen gelagert sein kann. Die Hebelfeder kann in einem montierten Zustand die Tellerfederzentrierbolzen zumindest teilweise, beispielsweise radial innenseitig, kontaktieren. Der mindestens eine Tellerfederzentrierbolzen weist ein erstes, dem Gehäusedeckel zugewandtes Ende mit einer Stirnfläche auf, aus der ein Bolzenschaft herausragt. Der Bolzenschaft weist einen geringeren Durchmesser auf als die Stirnfläche, wodurch ein Absatz in dem Tellerfederzentrierbolzen ausgebildet werden kann. Die Stirnfläche, insbesondere die freie Stirnfläche, kann ringförmig um den Bolzenschaft herum ausgebildet sein. Der Bolzenschaft des Tellerfederzentrierbolzens kann in einem montierten Zustand in einer entsprechend ausgebildeten Aufnahmeöffnung des Gehäusedeckels aufgenommen und, beispielsweise kraftschlüssig und/oder formschlüssig, gelagert sein. Die Stirnfläche des Tellerfederbolzens und eine Innenfläche des Gehäusedeckels bilden in einem montierten Zustand einen Überlappungsbereich aus, wobei die Stirnfläche und zumindest teilweise die Innenfläche benachbart zueinander angeordnet sind und überlappen, beispielsweise wenn der Tellerfederzentrierbolzen bis zum Anliegen des Absatzes in die Aufnahmeöffnung des Gehäusedeckels eingebracht ist. Die Innenfläche des Gehäusedeckels ist die Fläche, die der Stirnfläche des Tellerfederzentrierbolzens zugewandt ist, beispielsweise die anpressplattenseitige Fläche des Gehäusedeckels. Der Überlappungsbereich der Stirnfläche und der Innenfläche kann ringförmig um den Bolzenschaft herum ausgebildet sein. Der Überlappungsbereich kann einen Kontaktbereich und einen kontaktfreien Bereich aufweisen, wobei der Kontaktbereich radial außenseitig des Bolzenschaftes angeordnet sein kann und der kontaktfreie Bereich radial innenseitig benachbart zu dem Bolzenschaft angeordnet sein kann. In dem Kontaktbereich kontaktiert die Stirnfläche des Tellerfederzentrierbolzens die Innenfläche des Gehäusedeckels, wobei der Kontaktbereich ringförmig um den Bolzenschaft herum ausgebildet sein kann. In dem kontaktfreien Bereich sind die Stirnfläche des Tellerfederzentrierbolzens und die Innenfläche des Gehäusedeckels in einem montierten Zustand beabstandet zueinander angeordnet, beispielsweise unter Ausbildung eines Spaltes.

Durch die Ausbildung eines radial außenseitig, beabstandet zu dem Bolzenschaft, an der Stirnfläche angeordneten, insbesondere ringförmigen, Kontaktbereiches kann eine gezielte Abstützung des Tellerfederzentrierbolzens an der Innenfläche des Gehäusedeckels bewirkt werden, wodurch der abstützende Hebelarm vergrößert werden kann, wodurch die Biegebelastung des Tellerfederzentrierbolzens verringert werden kann und die Biegefestigkeit des Tellerfederzentrierbolzens verbessert werden kann. Durch die Anordnung eines radial außenseitigen Kontaktbereiches und eines dazu radial innenseitigen kontaktfreien Bereiches kann auch unter allen Toleranzlagen ein Abstützen des Tellerfederzentrierbolzens an dem Gehäusedeckel mit verringerter Biegebelastung gewährleistet werden. Dadurch kann die Ausfallgefahr, beispielsweise durch Bruch, der Tellerfederzentrierbolzen verringert werden, wodurch die Betriebsfestigkeit der Reibungskupplung verbessert werden kann.

In einer bevorzugten Ausgestaltungsform weist die Stirnfläche des Tellerfederzentrierbolzens eine radial außenseitig angeordnete umlaufende Nase auf. Die radial außenseitig an der, insbesondere freien, Stirnfläche ausgebildete Nase kann ringförmig ausgebildet sein. Die Nase kann in Form eines ringförmigen Wulstes an der Stirnfläche ausgebildet sein. Durch die Nase kann ein radial außenseitiger ringförmiger Kontaktbereich zur Kontaktierung der Innenfläche des Gehäusedeckels ausgebildet werden, wobei in dem radial innenseitigen kontaktfreien Bereich ein Spalt zwischen der Stirnfläche und der Innenfläche ausgebildet sein kann.

In einer besonders bevorzugten Ausgestaltungsform weist die Stirnfläche des Tellerfederzentrierbolzens ein von radial außen nach radial innen verlaufendes Gefälle auf. Durch das Gefälle zum Bolzenschaft hin kann die Stirnfläche einen konischen Querschnitt aufweisen, wodurch radial außenseitig ein ringförmiger Kontaktbereich zur Kontaktierung des Gehäusedeckels ausgebildet werden kann. Durch geometrische Ausgestaltung der Stirnfläche des Tellerfederzentrierbolzens kann kostengünstig, ohne kostenintensive Bearbeitung des Gehäusedeckels, eine verbesserte Abstützung des Tellerfederzentrierbolzens an dem Gehäusedeckel ermöglicht werden.

In einer besonders bevorzugten Ausgestaltungsform weist die Stirnfläche des Tellerfederzentrierbolzens eine ringförmige Ausnehmung auf. Die ringförmige Ausnehmung kann torusförmig radial innenseitig um den Bolzenschaft herum in der, insbesondere freien, Stirnfläche ausgebildet sein, wodurch bei unveränderter Aufnahmeöffnung des Gehäusedeckels ein größerer Übergangsradius zwischen dem Bolzenschaft und der Stirnfläche ausgebildet werden kann. Die Ausnehmung kann oberflächenbündig, tangential, mit einer Mantelfläche des Bolzenschaftes ausgebildet sein. Durch die ringförmige Ausnehmung kann radial innenseitig ein kontaktfreier Bereich ausgebildet werden. Zudem kann durch die Ausnehmung, beispielsweise durch Verringerung der Spannungen im Übergang von der Stirnfläche zu dem Bolzenschaft, die Biegebelastung des Bolzenschaftes deutlich vermindert werden, wodurch die Ausfallgefahr der Tellerfederzentrierbolzen verringert werden und die Betriebsfestigkeit der Reibungskupplung verbessert werden kann. Die Herstellbarkeit des Tellerfederzentrierbolzens kann dadurch verbessert werden.

Besonders bevorzugt weist die ringförmige Ausnehmung einen im Wesentlichen elliptischen Querschnitt auf. Der Querschnitt kann radial innenseitig, bolzenschaftseitig einen größeren Radius aufweisen, welcher nach radial außen in einen kleineren Radius übergeht. Durch den im Wesentlichen elliptischen Querschnitt kann eine deutliche Reduzierung der Spannungen im Übergang von dem Bolzenschaft zur Stirnfläche ermöglicht werden.

In einer bevorzugten Ausgestaltungsform weist die Innenfläche des Gehäusedeckels im Überlappungsbereich ein Gefälle von radial außen nach radial innen auf. Radial außen und radial innen sind auf die Aufnahmeöffnung in dem Gehäusedeckel bezogen. Durch das Gefälle in der Innenfläche kann eine innenflächenseitige, ringförmige Verjüngung der Dicke des Gehäusedeckels um die Aufnahmeöffnung herum und zur Mitte der Aufnahmeöffnung hin ausgebildet werden. Das Gefälle kann in dem Überlappungsbereich ausgebildet sein. Dadurch kann radial innenseitig, benachbart zu dem Bolzenschaft, ein ringförmige kontaktfreier Bereich zwischen Innenfläche und der Stirnfläche ausgebildet werden, wobei radial außenseitig, beispielsweise in einem Bereich ohne Gefälle, die Innenfläche die Stirnfläche ringförmig kontaktieren kann.

Die Erfindung betrifft ferner einen Antriebsstrang für ein Kraftfahrzeug mit mindestens einer Reibungskupplung, die wie vorstehend beschrieben aus- und weitergebildet sein kann. Dadurch kann die Ausfallgefahr der Tellerfederzentrierbolzen verringert werden, wodurch die Betriebsfestigkeit der Reibungskupplung verbessert werden kann.

Nachfolgend wird die Erfindung unter Bezugnahme auf die anliegenden Zeichnungen anhand bevorzugter Ausführungsbeispiele exemplarisch erläutert, wobei die nachstehend dargestellten Merkmale sowohl jeweils einzeln als auch in Kombination einen Aspekt der Erfindung darstellen können.

Es zeigen:
- Fig. 1:: eine schematische Schnittdarstellung einer Reibungskupplung mit einem Tellerfederzentrierbolzen;
- Fig. 2:: einen Tellerfederzentrierbolzen mit einer stirnflächenseitigen umlaufenden Nase;
- Fig. 3:: einen Tellerfederzentrierbolzen mit einem stirnflächigseitigem Gefälle;
- Fig. 4:: eine perspektivische Ansicht eines Tellerfederzentrierbolzens mit einer ringförmigen Ausnehmung;
- Fig. 5:: eine geschnitten Darstellung des Tellerfederzentrierbolzen aus Fig. 4; und
- Fig. 6:: einen Gehäusedeckel mit einem innenflächenseitigen Gefälle.

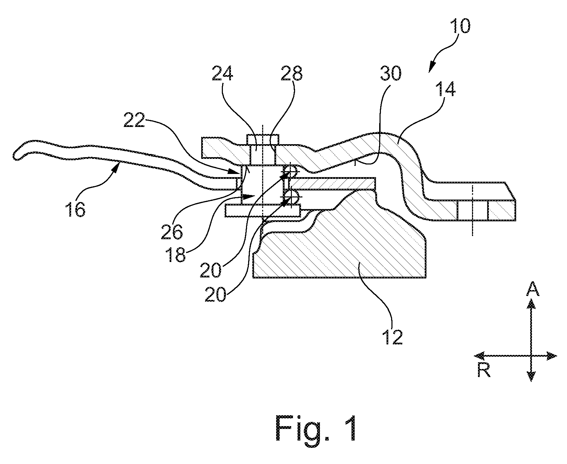

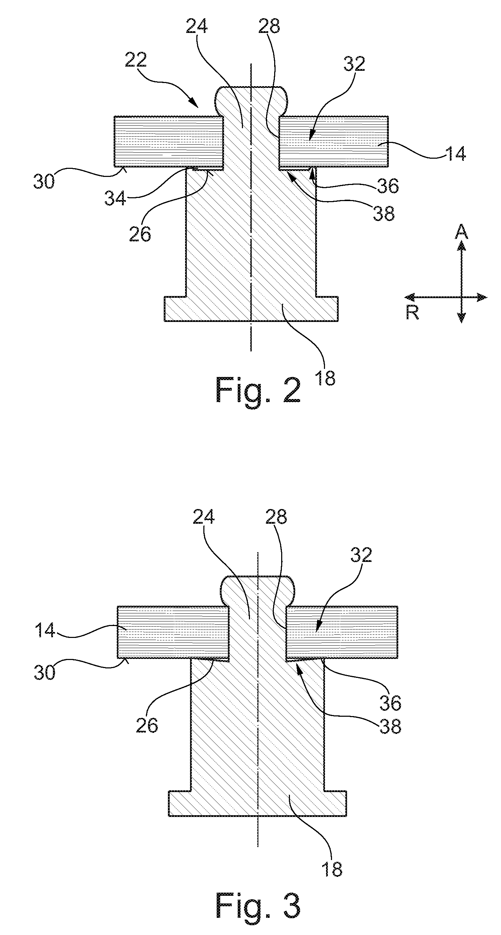

In Figur 1 ist eine Reibungskupplung 10 dargestellt, die insbesondere zur Anwendung als Anfahrkupplung in einem Antriebsstrang eines Kraftfahrzeuges ausgebildet ist, wobei die Reibungskupplung 10 eine Anpressplatte 12 aufweist, die drehfest, jedoch begrenzt verlagerbar in axialer Richtung A mit einem Gehäusedeckel 14 verbunden ist. Weiterhin weist die Kupplung 10 eine als Tellerfeder ausgebildete Hebelfeder 16 auf, welche als Anpressfeder zwischen der Anpressplatte 12 und dem Gehäusedeckel 14 wirksam ist und die Anpressplatte 12 in axialer Richtung A mit einer Kraft beaufschlagt, um eine Kupplungsscheibe (nicht dargestellt) zwischen der Anpressplatte 12 und einer Gegenplatte (nicht dargestellt) einzuklemmen. Die Hebelfeder 16 ist mittels Tellerfederzentrierbolzen 18 an dem Gehäusedeckel 14 kippbar gelagert, wobei die Hebelfeder 16 zwischen zwei Drahtringen 20, welche radial außenseitig um die Tellerfederzentrierbolzen 18 gespannt sind, gehalten wird. Der Tellerfederzentrierbolzen 18 weist an einem ersten Ende 22 einen Bolzenschaft 24 auf, der aus einer Stirnfläche 26 herausragt. Der Bolzenschaft 24 weist einen geringen Durchmesser auf als die Stirnfläche 26 und ist in einer Aufnahmeöffnung 28 des Gehäusedeckels 14 aufgenommen, wobei die Stirnfläche 26 zumindest teilweise eine Innenfläche 30 des Gehäusedeckels 14 kontaktiert. Die Stirnfläche 26 und die Innenfläche 30 sind benachbart zueinander und überlappend angeordnet und bilden einen Überlappungsbereich 32 aus. Der Tellerfederzentrierbolzen 18 (Fig. 2) weist an der Stirnfläche 26 radial außenseitig eine ringförmig umlaufende Nase 34 auf. Dadurch wird in dem ringförmigen Überlappungsbereich 32 radial außenseitig ein ringförmiger Kontaktbereich 36 und radial innenseitig ein kontaktfreier Bereich 38 ausgebildet. In dem durch die Nase 36 ausgebildeten Kontaktbereich 36 kontaktiert die Stirnfläche 26 die Innenfläche 30. In dem radial innen liegenden kontaktfreien Bereich 38 sind die Stirnfläche 26 und die Innenfläche 30 beabstandet zueinander angeordnet.

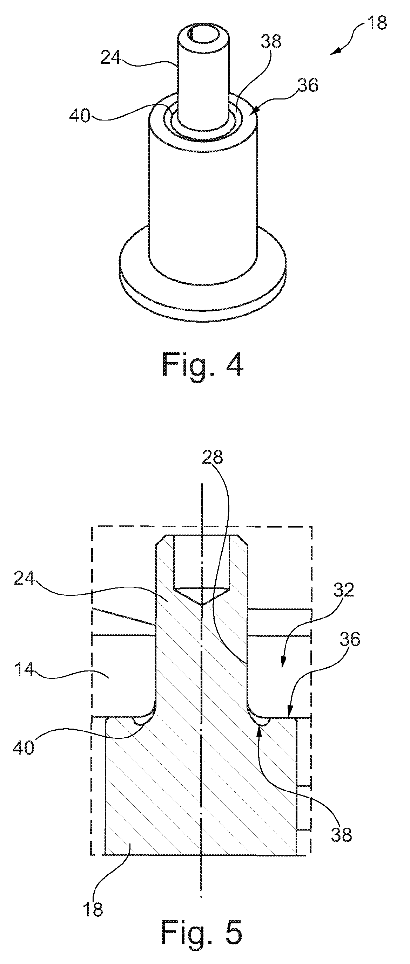

In Fig. 3 weist der Tellerfederzentrierbolzen 18 ein Gefälle in der Stirnfläche 26 auf, welches von radial außen nach radial innen verläuft, wodurch radial inneseitig, benachbart zu dem Bolzenschaft 24, in dem Überlappungsbereich 32 ein kontaktfreier Bereich 38 ausgebildet wird und radial außen ein ringförmiger Kontaktbereich 36 zur Kontaktierung der Innenfläche 30 des Gehäusedeckels 14. Fig. 4 zeigt eine perspektivische Ansicht eines Tellerfederzentrierbolzens 18 mit einer ringförmige, torusförmigen Ausnehmung 40, welche radial innen benachbart zu dem Bolzenschaft 24 in der Stirnfläche 26 ausgebildet ist. Durch die Ausnehmung 40 wird radial innen der kontaktfreie Bereich 38 und radial außen der Kontaktbereich 36 ausgebildet. Die Ausnehmung 40 weist einen elliptischen Querschnitt (Fig. 5) auf, wobei der Radius radial innen, benachbart zu dem Bolzenschaft 24 größer ist als radial außen, wodurch der Radius des Querschnittes von radial innen nach radial außen kleiner wird. Dadurch können die Spannungen in dem Übergang von dem Bolzenschaft 24 zur Stirnfläche 26 deutlich verringert werden, ohne Änderungen an dem Gehäusedeckel 14 vorzunehmen.

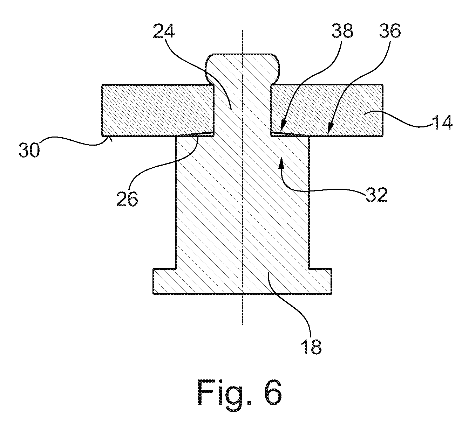

Fig. 6 zeigt den Gehäusedeckel 14 mit einem Gefälle um die Aufnahmeöffnung 28 herum, wobei das Gefälle von radial außen nach radial innen zur Aufnahmeöffnung 28 verläuft, so dass durch das Gefälle in der Innenfläche 30 radial innenseitig um die Aufnahmeöffnung 28 herum ein kontaktfreier Bereich 38 ausgebildet wird und radial außenseitig, beispielsweise an dem Anfang des Gefälles, ein Kontaktbereich 36 ausgebildet wird.

### Bezugszeichenliste

- 10: Reibungskupplung
- 12: Anpressplatte
- 14: Gehäusedeckel
- 16: Hebelfeder
- 18: Tellerfederzentrierbolzen
- 20: Drahtring
- 22: erstes Ende
- 24: Bolzenschaft
- 26: Stirnfläche
- 28: Aufnahmeöffnung
- 30: Innenfläche
- 32: Überlappungsbereich
- 34: Nase
- 36: Kontaktbereich
- 38: kontaktfreier Bereich
- 40: Ausnehmung

- A: axiale Richtung
- R: radiale Richtung

## Patentansprüche

1. Reibungskupplung (10) für einen Antriebsstrang eines Kraftfahrzeugs, mit einer Anpressplatte (12), die drehfest, jedoch axial begrenzt verlagerbar mit einem Gehäusedeckel (14), verbunden ist, einer vorzugsweise als Tellerfeder ausgebildeten Hebelfeder (16) zur Kraftbeaufschlagung der Anpressplatte (12) in axialer Richtung (A), wobei die Hebelfeder (16) mit mindestens einem Tellerfederzentrierbolzen (18) an dem Gehäusedeckel (14) gelagert ist, wobei der Tellerfederzentrierbolzen (18) an einem ersten Ende (22) einen Stirnfläche (26) mit einem aus der Stirnfläche (26) herausragenden Bolzenschaft (24) aufweist, wobei der Bolzenschaft (24) in einem montierten Zustand in einer entsprechenden Aufnahmeöffnung (28) des Gehäusedeckels (14) gelagert ist und die Stirnfläche (26) des Tellerfederzentrierbolzen (18) und eine Innenfläche (30) des Gehäusedeckels (14) einen Überlappungsbereich (32) ausbilden, **dadurch gekennzeichnet, dass**
der Überlappungsbereich (32) einen Kontaktbereich (36) und einen kontaktfreien Bereich (38) aufweist, wobei der Kontaktbereich (36) radial außenseitig des Bolzenschaftes (24) angeordnet ist und der kontaktfreie Bereich (38) radial innenseitig benachbart zu dem Bolzenschaft (24) des Tellerfederzentrierbolzens (18) angeordnet ist.

2. Reibungskupplung nach Anspruch 1, **dadurch gekennzeichnet, dass** die Stirnfläche (26) des Tellerfederzentrierbolzens (18) eine radial außenseitig angeordnete umlaufende Nase (34) aufweist.

3. Reibungskupplung nach Anspruch 1 oder 2, **dadurch gekennzeichnet, dass** die Stirnfläche (26) des Tellerfederzentrierbolzens (18) ein von radial außen nach radial innen verlaufendes Gefälle aufweist.

4. Reibungskupplung nach einem der vorherigen Ansprüche, **dadurch gekennzeichnet, dass** die Stirnfläche (26) des Tellerfederzentrierbolzens (18) eine ringförmige Ausnehmung (40) aufweist.

5. Reibungskupplung nach Anspruch 4, **dadurch gekennzeichnet, dass** die ringförmige Ausnehmung (40) einen im Wesentlichen elliptischen Querschnitt aufweist.

6. Reibungskupplung nach einem der vorherigen Ansprüche, **dadurch gekennzeichnet, dass** die Innenfläche (30) des Gehäusedeckels (14) im Überlappungsbereich (32) ein Gefälle von radial außen nach radial innen aufweist.

7. Antriebsstrang für ein Kraftfahrzeug mit mindestens einer Reibungskupplung (10) nach einem der Ansprüche 1 bis 6.

## Claims

1. Friction clutch (10) for a drivetrain of a motor vehicle, having a pressure plate (12) which is connected rotationally conjointly, but so as to be axially displaceable to a limited extent, to a housing cover (14), having a lever spring (16), which is preferably in the form of a disc spring, for the exertion of force on the pressure plate (12) in an axial direction (A), wherein the lever spring (16) is mounted by way of at least one disc spring centring bolt (18) on the housing cover (14), wherein the disc spring centring bolt (18) has, at a first end (22), a face surface (26) with a bolt shank (24) which projects out of the face surface (26), wherein the bolt shank (24) is, in an installed state, mounted in a corresponding receiving opening (28) of the housing cover (14), and the face surface (26) of the disk spring centring bolt (18) and an inner surface (30) of the housing cover (14) form an overlap region (32), **characterized in that**
the overlap region (32) has a contact region (36) and a contact-free region (38), wherein the contact region (36) is arranged radially outside the bolt shank (24), and the contact-free region (38) is arranged radially at the inside, adjacent to the bolt shank (24) of the disc spring centring bolt (18).

2. Friction clutch according to Claim 1, **characterized in that** the face surface (26) of the disc spring centring bolt (18) has an encircling lug (34) arranged radially at the outside.

3. Friction clutch according to Claim 1 or 2, **characterized in that** the face surface (26) of the disc spring centring bolt (18) has a downward gradient running from radially outside to radially inside.

4. Friction clutch according to one of the preceding claims, **characterized in that** the face surface (26) of the disc spring centring bolt (18) has a ring-shaped recess (40).

5. Friction clutch according to Claim 4, **characterized in that** the ring-shaped recess (40) has a substantially elliptical cross section.

6. Friction clutch according to one of the preceding claims, **characterized in that** the inner surface (30) of the housing cover (14) has, in the overlap region (32), a downward gradient running from radially outside to radially inside.

7. Drivetrain for a motor vehicle, having at least one friction clutch (10) according to one of Claims 1 to 6.

## Revendications

1. Embrayage à friction (10) pour une chaîne cinématique d'un véhicule automobile, comprenant une plaque de pressage (12) qui est connectée de manière solidaire en rotation mais de manière déplaçable axialement dans une mesure limitée à un couvercle de boîtier (14), un ressort de levier (16) réalisé de préférence sous forme de rondelle-ressort pour la sollicitation par force de la plaque de pressage (12) dans la direction axiale (A), le ressort de levier (16) étant supporté avec au moins un boulon de centrage de rondelle-ressort (18) sur le couvercle de boîtier (14), le boulon de centrage de rondelle-ressort (18) présentant, au niveau d'une première extrémité (22), une surface frontale (26) avec une tige de boulon (24) faisant saillie hors de la surface frontale (26), la tige de boulon (24) étant supportée, dans l'état monté, dans une ouverture de réception correspondante (28) du couvercle de boîtier (14), et la surface frontale (26) du boulon de centrage de rondelle-ressort (18) et une surface intérieure (30) du couvercle de boîtier (14) constituant une région de chevauchement (32), **caractérisé en ce que**
la région de chevauchement (32) présente une région de contact (36) et une région sans contact (38), la région de contact (36) étant disposée radialement du côté extérieur de la tige de boulon (24) et la région sans contact (38) étant disposée radialement du côté intérieur à côté de la tige de boulon (24) du boulon de centrage de rondelle-ressort (18).

2. Embrayage à friction selon la revendication 1, **caractérisé en ce que** la surface frontale (26) du boulon de centrage de rondelle-ressort (18) présente un ergot (34) périphérique disposé radialement du côté extérieur.

3. Embrayage à friction selon la revendication 1 ou 2, **caractérisé en ce que** la surface frontale (26) du boulon de centrage de rondelle-ressort (18) présente une pente s'étendant radialement de l'extérieur vers l'intérieur.

4. Embrayage à friction selon l'une quelconque des revendications précédentes, **caractérisé en ce que** la surface frontale (26) du boulon de centrage de rondelle-ressort (18) présente un évidement de forme annulaire (40).

5. Embrayage à friction selon la revendication 4, **caractérisé en ce que** l'évidement de forme annulaire (40) présente une section transversale essentiellement elliptique.

6. Embrayage à friction selon l'une quelconque des revendications précédentes, **caractérisé en ce que** la surface intérieure (30) du couvercle de boîtier (14) présente, dans la région de chevauchement (32), une pente allant radialement de l'extérieur vers l'intérieur.

7. Chaîne cinématique pour un véhicule automobile comprenant au moins un embrayage à friction (10) selon l'une quelconque des revendications 1 à 6.
